# NEW EUROPEAN PATENT SPECIFICATION

(11) **EP 0 531 469 B2**
(45) Date of publication and mention of the opposition decision: **02.08.2000**
(45) Mention of the grant of the patent: 12.04.1995
(21) Application number: 92904908.8
(22) Date of filing: 25.11.1991
(51) Int. Cl.: F16C 33/56, F16C 9/04

(54) **POLYMER BEARING CAGE WITH AMORPHOUS CASE**
POLYMER-LAGERGEHÄUSE MIT AMORPHER UMMANTELUNG
CAGE DE PALIER POLYMERE POURVUE D'UNE ENVELOPPE AMORPHE

(30) Priority: 08.04.1991 US 681283
(43) Date of publication of application: 17.03.1993
(73) Proprietor: THE TORRINGTON COMPANY, Torrington, Connecticut 06790 (US)
(72) Inventor: SEIFERT, Keith, L., Torrington, CT 06790 (US); FURST, Robert, E., Griswold, CT 06351 (US)
(74) Representative: Feakins, Graham Allan
(86) International application number: PCT/US91/08826
(87) International publication number: WO 92/17709

(56) References cited:
- Patent Abstracts of Japan, vol. 14, no. 58 (M-930), 2 February 1990, & JP,A,1283127 (MITSUI TOATSU CHEM. INC.) 14 November 1989
- Patent Abstracts of Japan, vol. 13, no. 52 (M-794), 7 February 1989, & JP,A,63256422 (TOKUYAMA SODA CO., LTD) 24 October 1988
- F.Altendorf and E.Seitl, "Schichtstruktur von Spritzgussteilen aus teilkristallinem Polypropylen", Kunstoffe 76 (1986) 1, page 47 - 50
- A.Olschewski, "Hochtemperaturkunststoffe für Wälzlagerkäfige", Kugellager-Zeitschrift 228, Jahrgang 61 (1987) pages 13 - 16
- H.Saechtling, "Kunststoff Taschenbuch", 24th ed. (1989), Carl Hanser Verlag München Wien, pages 117 - 134, 317 - 319, 335 - 339 and 341
- M.P.Wolverton and J.A.Duffy, "The Influence of Mold Temperature On The Tribological Behavior of Victrex PEEK 450GL30", 27 August, 1991

## Description

This invention relates to plastics part and a method of making same, particularly as a bearing cage, thrust washer and/or an annular shaft seal.

Bearing cages are conventionally used in ball and roller bearings to retain and separate rolling elements (rollers, needles or balls) in predetermined relative positions. The bearing cages lie between inner and outer bearing races.

In certain applications, bearing cages are exposed to relatively difficult conditions that limit the useful life of the bearing cages or require the use of complex and expensive construction. One such application is in the needle bearing assembly for a crank of a two-cycle engine such as, for example, an outboard motor.

In such application, the needle bearing assembly is exposed to high loads generated by combustion pressure, inertia of the parts, and centrifugal force. This application is so severe that a special high precision bearing cage made of silver-plated steel, is generally used. The silver is believed to act as a lubricant, at least during a break-in period of the bearing.

There are numerous disadvantages to the above described bearing cage. The high precision requires numerous steps for manufacturing, such as piercing, heat treating, grinding, and chemical finishing. The initial cost of tooling is very high, and the chemical by-products produced during manufacture result in environmental problems of disposal. In addition, because of the many operations which must be performed, the time for manufacture of such bearing cages is long. Thus, a larger than desired inventory of work in process must be maintained. The larger number of operations, combined with the required precision, may result in high labour costs or relatively high scrap rate. And, the required silver substantially adds to the cost.

In H. Saechtling, "Kunststoff Taschenbuch", 24th edition of 1989, published by Carl Hanser Verlag München Wien, there are disclosures at, e.g., pages 117 to 134 of a figure (3.43) which gives processing temperature ranges for different plastics, including PEEK, with a similar range of injection temperatures to those temperatures specified in claim 1 of the present invention, whilst Table 3.8 gives guidance values for the injection moulding of plastics. Page 317 of that document also suggests that a high crystallinity improves the wear resistance.

Reference is also made to A. Olschewski, "Hochtemperaturkunststoffe für Wälzlagerkäfige", Kugellager-Zeitschrift 228, volume 61 (1987) at pages 13 to 16, which discusses properties and the use of PEEK as a high temperature plastic for a bearing cage.

According to one aspect of the present invention, there is provided a method for producing a part made of a plastics resin, the method comprising heating a mould to a moulding temperature; heating said plastics resin to an injection temperature; and injecting said plastics resin into said mould, wherein said plastics resin is a polyetheretherketone, said moulding temperature is from about 250 to 270 degrees F (121 to 132° C) and said injection temperature is from about 700 to about 800 degrees Fahrenheit (about 371 to about 427° C), so as to produce an amorphous surface layer covering a crystalline inner body of a substantial portion of said part, said amorphous layer being arranged to provide a wear surface for improving the ability of said part to withstand friction.

According to a second aspect of the present invention, there is provided a method for producing a finished part comprised of a plastics resin, the method comprising moulding an intermediate part having a crystalline structure; heating at least a portion of a surface of said crystalline intermediate part; and quenching said at least a portion of a surface of said crystalline intermediate part to form an amorphous surface layer upon a crystalline inner body, said amorphous outer layer being such as to provide a wear surface for improving the ability of said plastics part to withstand friction.

For a better understanding of the invention and to show how the same may be carried into effect, reference will now be made, by way of example, to the accompanying drawings, in which:-
Figure 1 is a sectional view of a portion of a two-cycle engine showing the location of a crank pin upon which a bearing cage of the present invention may be installed;

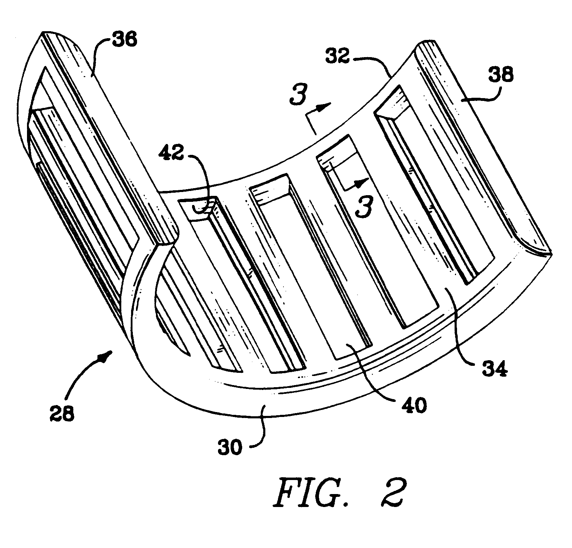

Figure 2 is a perspective view of half of a bearing cage; and
Figure 3 is a cross-sectional view of a rail of the bearing cage of Figure 2, as indicated by the line 3-3.

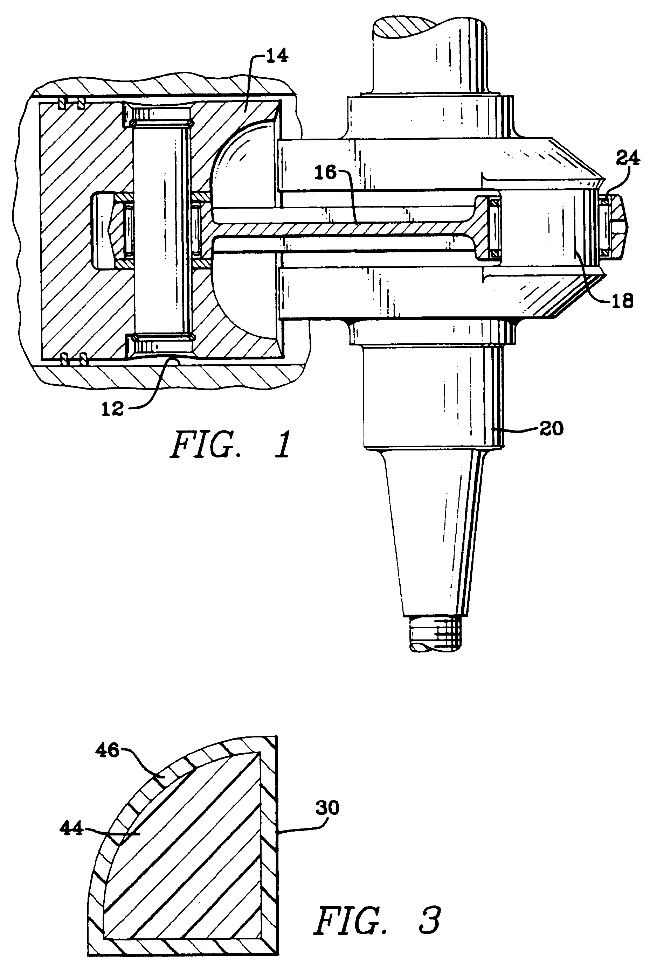

Referring first to Figure 1, the illustrated portion of a two-cycle engine 10 includes a cylinder 12 in which reciprocates a piston 14. A connecting rod 16 transmits the reciprocating motion of piston 14 to crank pin 18 eccentrically disposed on a crank 20. A drive shaft, not shown, is rigidly affixed to the crank 20. The reciprocating motion of piston 14 is thus converted to desired rotary motion of the drive shaft through the action of the connecting rod 16 and crank 20.

A needle bearing assembly 24 (not shown in detail in Figure 1) provides rolling contact between crank pin 18 and connecting rod 16. As noted in the earlier description of the prior art, the needle bearing assembly 24 is subjected to severe forces in this location. As previously stated, bearing cages in that application are conventionally made of silver-plated steel.

A bearing cage of needle bearing assembly 24 includes a mating to become a crystalline, even on its outer surface.

The applicants have found that wear is most likely on the surfaces of rails 30 and 32. Little if any wear problem occurs in the bars 34 since these contact only the very smooth surfaces of the bearing needles (not shown). For that reason, it is preferable to employ a single gate in the centre of one of bars 34. The surface of this bar 34, in the vicinity of the gate, becomes crystalline. However, rails 30 and 32 are sufficiently distant from the gate in this bar 34 to be formed with an outer layer 46 of amorphous plastics.

The exact thickness of the outer layer 46 for best operation has not yet been determined. It is believed that a thickness of a few thousandths of an inch (1 mil = 25.40 µm) is satisfactory. The thickness of outer layer 46 can be changed at will by varying moulding parameters. For example, one or more of the following changes in parameters increase the thickness of the amorphous layer; reducing the temperature of the mould, decreasing the injection speed, and decreasing the injection pressure immediately before closing off the gate. Changing one or more of these parameters in the opposite direction reduces the thickness of the amorphous layer.

Service tests in a two-cycle engine appear to indicate that use of the present bearing cage also increases the life of the entire two-cycle engine. This may result from the fact that cage half 28 is only one-third the weight of its silver-plated steel counterpart, thus reducing the inertial and centrifugal loading. Besides reducing loading on parts immediately adjacent to the bearing cage, the reduced weight may reduce engine vibration sufficiently to increase the life of components elsewhere in the two-cycle engine.

The above description is directed to an environment of a bearing cage in a two-cycle engine. However, the invention should not be considered limited either to a bearing cage or to a two-cycle engine. Certain thrust washers and annular shaft seals, for example, are fabricated of. silver-plated steel to reduce frictional wear. It is believed that the present plastics moulding technique may be advantageously employed to produce a thrust washer or annular shaft seal, as well as other parts.

The applicants believe that the amorphous outer layer on the cage half 28 tends to act as a lubricant or as a sacrificial break-in surface, and tends to smear out over or otherwise conform to mating surfaces in needle bearing assembly 24 during break-in. With the mating surfaces thus smoothed and lubricated, friction is believed to be reduced sufficiently to give a substantial improvement in the life of the bearing cage.

The moulding cage half 28 using the above non-standard moulding parameters is only one way to achieve the present structure. For example, the cage half 28 may be moulded using conventional parameters to produce an intermediate product entirely of crystalline plastics. Then, the surface may be melted and rapidly quenched to produce the amorphous surface layer. Alternatively, the output of an industrial laser may be directed against the surfaces of the bearing cage half 28 to melt a thin outer layer. Then the part may be plunged into a cooling bath, or be rapidly cooled by liquid spray or air stream.

A further way in which the part may be formed includes producing a crystalline intermediate product which is then dipped into a heated bath for a sufficient time to melt the outer layer. Then, the part is withdrawn from the bath and cooled by one of the above cooling techniques. For example, the part may be plunged into a bath of molten lead or tin for a short time, then withdrawn and quenched.

It is believed that other crystalline plastics may be employed. The techniques for forming the parts will vary with the particular crystalline plastics employed. It is believed that the present invention may employ nylon or polyacetal plastics, among others, either with or without suitable fillers. Another possibility would be polyetheretherketone. One skilled in the art, in light of the present specification, would be fully enabled to establish required parameters for fabrication or parts using such materials.

It will be appreciated that the present invention provides for example a bearing cage moulded of plastics resin and having a significantly improved life, even in difficult applications such as the needle bearing assembly for a crank of a two-cycle engine. In extended tests, the useful life of the present bearing cage has exceeded the normally expected life.

## Claims

1. A method for producing a part made of a plastics resin, the method comprising heating a mould to a moulding temperature; heating said plastics resin to an injection temperature; and injecting said plastics resin into said mould, wherein said plastics resin is a polyetheretherketone, said moulding temperature is from about 250 to 270 degrees F (121 to 132° C) and said injection temperature is from about 700 to about 800 degrees Fahrenheit (about 371 to about 427° C), so as to produce an amorphous surface layer (46) covering a crystalline inner body (44) of a substantial portion of said part, said amorphous layer being arranged to provide a wear surface for improving the ability of said part to withstand friction.

2. A method according to claim 1, wherein said part is a bearing cage (28) having first and second rails (30, 32) joined together by a plurality of bars (34), and wherein the step of injecting includes injecting said plastics resin material into said mould in a location intermediate ends of one of said plurality of bars.

3. A method for producing a finished part comprised of a plastics resin, the method comprising moulding an intermediate part having a crystalline structure; heating at least a portion of a surface of said crystalline intermediate part; and quenching said at least a portion of a surface of said crystalline intermediate part to form an amorphous surface layer upon a crystalline inner body, said amorphous outer layer being such as to provide a wear surface for improving the ability of said plastics part to withstand friction.

## Patentansprüche

1. Verfahren zum Herstellen eines aus Kunstharz bestehenden Teils, wobei das Verfahren ein Erhitzen einer Form auf eine Formtemperatur, ein Erhitzen des Kunstharzes auf eine Einspritztemperatur und ein Einspritzen des Kunstharzes in die Form aufweist, wobei das Kunstharz ein Polyätherätherketon ist, wobei die Formtemperatur von etwa 121 bis 132°C (250 bis 270°F) ist und die Einspritztemperatur von etwa 371 bis etwa 427°C (etwa 700 bis etwa 800°F) ist, so daß eine amorphe Oberflächenschicht (46) erzeugt wird, die einen kristallinen inneren Körper (44) eines wesentlichen Abschnitts des Teils abdeckt, wobei die amorphe Schicht so angeordnet ist, daß sie eine Verschleißoberfläche zum Verbessern der Fähigkeit des Teils bietet, Reibung zu widerstehen.

2. Verfahren nach Anspruch 1, bei dem das Teil ein Lagerkäfig (28) ist, der erste und zweite Ränder (30, 32) hat, die miteinander durch eine Vielzahl von Stegen (34) verbunden sind, und wobei der Schritt des Einspritzens ein Einspritzen des Kunststoffharzmaterials in die Form an einer Stelle zwischen Enden eines der Vielzahl von Stegen aufweist.

3. Verfahren zum Herstellen eines fertigen Teils bestehend aus einem Kunstharz, wobei das Verfahren aufweist: Formen eines Zwischenteils, das eine kristalline Struktur hat; Erhitzen wenigstens eines Abschnitts einer Oberfläche des kristallinen Zwischenteils; und Abschrecken des wenigstens einen Abschnitts einer Oberfläche des kristallinen Zwischenteils, um eine amorphe Oberflächenschicht auf einem kristallinen inneren Körper zu bilden, wobei die amorphe äußere Schicht derart ist, daß sie eine Verschleißoberfläche zum Verbessern der Fähigkeit des Kunststoffteils bietet, Reibung zu widerstehen.

## Revendications

1. Procédé de fabrication d'une pièce formée d'une résine de matière plastique, le procédé comprenant le chauffage d'un moule à une température de moulage, le chauffage de la résine de matière plastique à une température d'injection, et l'injection de la résine de matière plastique dans le moule, dans lequel la résine de matière plastique est une polyétheréthercétone, la température de moulage est comprise entre environ 121 et 132 °C (250 et 270 °F) et la température d'injection est comprise entre environ 371 et environ 427 °C (environ 700 à environ 800 °F), si bien qu'il se forme une couche superficielle amorphe (46) recouvrant un corps interne cristallin (44) constitué d'une partie importante de ladite pièce, la couche amorphe étant destinée à former une surface d'usure pour accroître l'aptitude de la pièce à supporter le frottement.

2. Procédé selon la revendication 1, dans lequel ladite pièce est une cage (28) de roulement ayant un premier et un second rail (30, 32) raccordés l'un à l'autre par plusieurs barres (34), et dans lequel l'étape d'injection comprend l'injection de la matière plastique de résine dans le moule a un emplacement compris entre les extrémités de l'une des barres.

3. Procédé de fabrication d'une pièce terminée constituée d'une résine de matière plastique, le procédé comprenant le moulage d'une pièce intermédiaire ayant une structure cristalline, le chauffage d'une partie au moins d'une surface de la pièce intermédiaire cristalline, et le refroidissement de ladite partie au moins de surface de la pièce intermédiaire cristalline pour la formation d'une couche superficielle amorphe sur un corps interne cristallin, la couche amorphe étant destinée à former une surface d'usure pour accroître l'aptitude de la pièce à supporter le frottement.
